# EUROPEAN PATENT APPLICATION

(11) **EP 2 925 097 A2**
(43) Date of publication of application: **30.09.2015**
(21) Application number: 15000152.7
(22) Date of filing: 20.01.2015
(51) Int. Cl.: H05B 37/02

(54) **Wirelessly programmable power converter system, topology and methods**

(30) Priority: 22.01.2014 US 201414160708
(71) Applicant: ROAL ELECTRONICS S.p.A., 60022 Castelfidardo (AN) (IT)
(72) Inventor: Koehler, Bill, Saylorsburg, PA 18353 (US); Mulvey, Donald, deceased (US)
(74) Representative: Harrison, Michael Robert

(57) **Abstract**

A system 100B, topology 100A, and methods 120A for wirelessly programming a power converter 30G to operate at various output levels and perform various functions. Other embodiments may be described and claimed.

## Description

### Technical Field

Various embodiments described herein relate to programmable power converter systems, typology and methods.

### Background Information

It may be desirable to provide a programmable power converter that can be programmed or configured to operate at various output levels and have different functionality. The present invention provides devices for same.

### Brief Description of the Drawings

FIG. 1A is a simplified diagram of a power conversion architecture according to various embodiments.
FIG. 1B is a simplified diagram of a power conversion architecture according to various embodiments.
FIG. 1C is a simplified diagram of a power conversion architecture according to various embodiments.
FIG. 1D is a simplified diagram of a power conversion architecture according to various embodiments.
FIG. 1E is a simplified diagram of a power conversion architecture according to various embodiments.
FIG. 2A is a simplified diagram of a programmable power conversion architecture according to various embodiments.
FIG. 2B is a simplified diagram of a programmable power conversion architecture according to various embodiments.
FIG. 2C is a simplified diagram of a programmable power conversion architecture according to various embodiments.
FIG. 3A is a block diagram of a wired programmable power converter system according to various embodiments.
FIG. 3B is a block diagram of a wirelessly programmable power converter system according to various embodiments.
FIG. 3C is a block diagram of a wirelessly programmable power converter system according to various embodiments.
FIG. 3D is a block diagram of a wirelessly programmable power converter system including an application specific integrated circuit (ASIC) according to various embodiments.
FIG. 3E is a block diagram of a programmable power converter system including light to energy conversion module according to various embodiments.
FIG. 3F is a block diagram of a programmable power converter system including an energy conversion module according to various embodiments.
FIG. 4A is a block diagram of power converter wired programming architecture according to various embodiments.
FIG. 4B is a block diagram of power converter wirelessly programming architecture according to various embodiments.
FIG. 4C is a block diagram of multiple power converter wirelessly programming architecture according to various embodiments.
FIG. 4D is a block diagram of multiple power converter wirelessly programming architecture according to various embodiments.
FIG. 4E is a block diagram of another multiple power converter wirelessly programming architecture according to various embodiments.
FIG. 5 is a flow diagram illustrating several methods according to various embodiments.
FIG. 6 is a block diagram of a control module according to various embodiments.

### Detailed Description

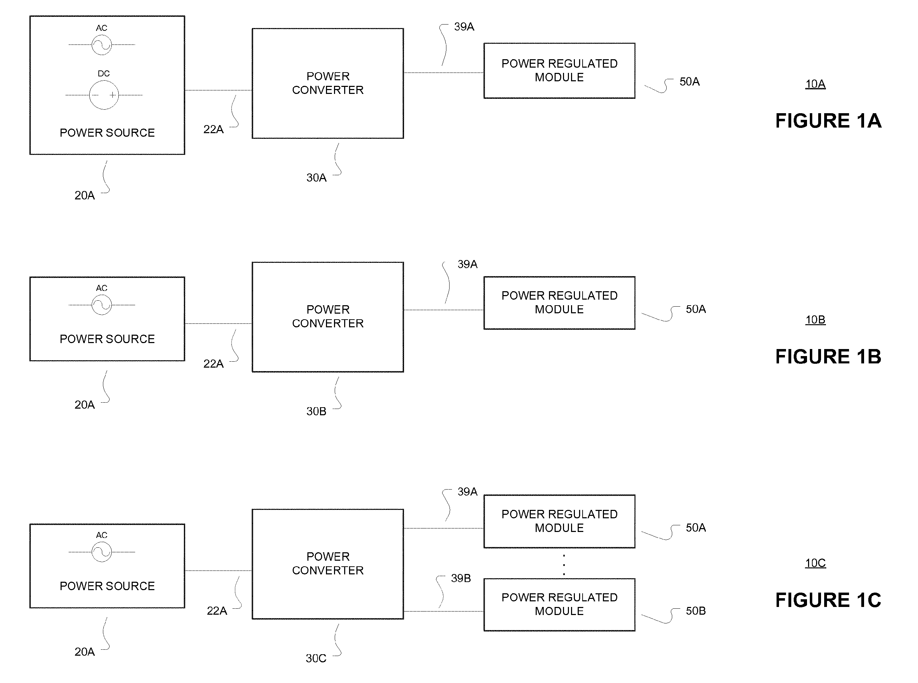

FIG. 1A is a simplified diagram of a power conversion architecture 10A according to various embodiments. As shown in FIG. 1A, architecture 10A includes a power source 20A, a power converter or driver 30A, and a power regulated module or device 50A. In an embodiment, it may be desirable to provide regulated or controlled energy or power to a module or device 50A. The power regulated module 50A may require a power signal 39A having specific waveforms, current levels, voltage levels, or power levels. In an embodiment, the power signal 39A may include a direct current (DC) waveform. As shown in FIG. 1A, a power source 20A may provide a power signal 22A having various waveforms including Alternating Current (AC) and DC waveforms. The power converter 30A may include circuitry to convert an AC or DC power signal 22A into a desired, regulated power signal 39A.

FIG. 1B is a simplified diagram of a power conversion architecture 10B according to various embodiments. As shown in FIG. 1B, architecture 10B includes a power source 20A, a power converter or driver 30B, and a power regulated module or device 50A. The power regulated module 50A may require a power signal 39A having specific waveforms, current levels, voltage levels, or power levels. In an embodiment, the power signal 39A may include a direct current (DC) or PWM waveform. As shown in FIG. 1B, a power source 20A may provide a power signal 22A having an AC waveform. The power converter 30B may include circuitry to convert an AC power signal 22A into a desired, regulated power signal 39A.

FIG. 1C is a simplified diagram of a power conversion architecture 10C according to various embodiments. As shown in FIG. 1C, architecture 10C includes a power source 20A, a power converter or driver 30C, and a plurality of power regulated modules or devices 50A-B. The plurality of power regulated modules 50A-B may require power signals 39A-B having specific waveforms, current levels, voltage levels, or power levels. In an embodiment, the power signals 39A-B may include a direct current (DC) or PWM waveform. As shown in FIG. 1C, a power source 20A may provide a power signal 22A having an AC waveform. The power converter 30B may include circuitry to convert an AC power signal 22A into a plurality of desired, regulated power signals 39A-B.

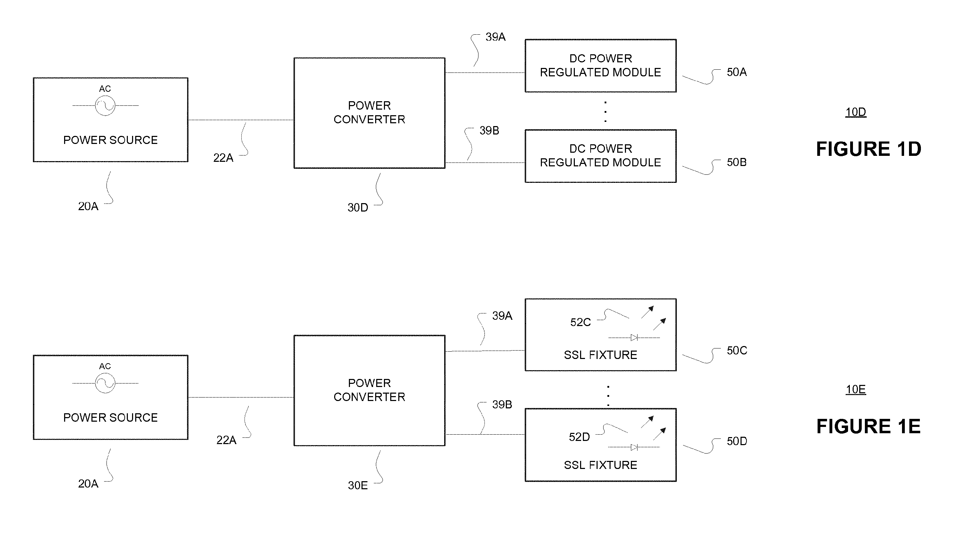

FIG. 1D is a simplified diagram of a power conversion architecture 10D according to various embodiments. As shown in FIG. 1D, architecture 10D includes a power source 20A, a power converter or driver 30D, and a plurality of DC power regulated modules or devices 50A-B. The plurality of DC power regulated modules 50A-B may require power signals 39A-B having specific waveforms, current levels, voltage levels, or power levels. As shown in FIG. 1D, a power source 20A may provide a power signal 22A having an AC waveform. The power converter 30D may include circuitry to convert an AC power signal 22A into a plurality of desired, regulated DC power OR PWM signals 39A-B.

FIG. 1E is a simplified diagram of a power conversion architecture 10E according to various embodiments. As shown in FIG. 1E, architecture 10E includes a power source 20A, a power converter or driver 30E, and a plurality of solid-state lighting (SSL) fixtures 50C-D. The plurality of SSL fixtures 50C-D may require power signals 39A-B having specific waveforms, current levels, voltage levels, or power levels. In addition, the waveform, current, voltage, and power may be varied during various operational events (power on, power off, and others) to protect the SSL fixtures 50C-D. In an embodiment, the SSL fixtures may include one or more light emitting diodes 52C, 52D. As shown in FIG. 1B, a power source 20A may provide a power signal 22A having an AC waveform. The power converter 30E may include circuitry to convert an AC power signal 22A into a plurality of desired, regulated DC OR PWM power signals 39A-B.FIG as required for SSL fixtures 50C-D.

The power regulated modules 50A-50B shown in FIGs. 1A-1D may require different power signals 39A-39B in each architecture 10A-10D. It is noted the power signals 39A-39B may include pulse width modulated (PWM), saw tooth shaped waveforms, and others to drive motors, lights, and other power regulated modules or devices 50A-50D. A different power converter 30A-30D in each architecture 10A-10D may be required to generate or provide the power signals 39A-39B required by each power regulated module 50A-50B. A different power converter 30E may also be required in architecture 10E to provide required or desired signals 39A-39B for SSL fixtures 50C-50D.

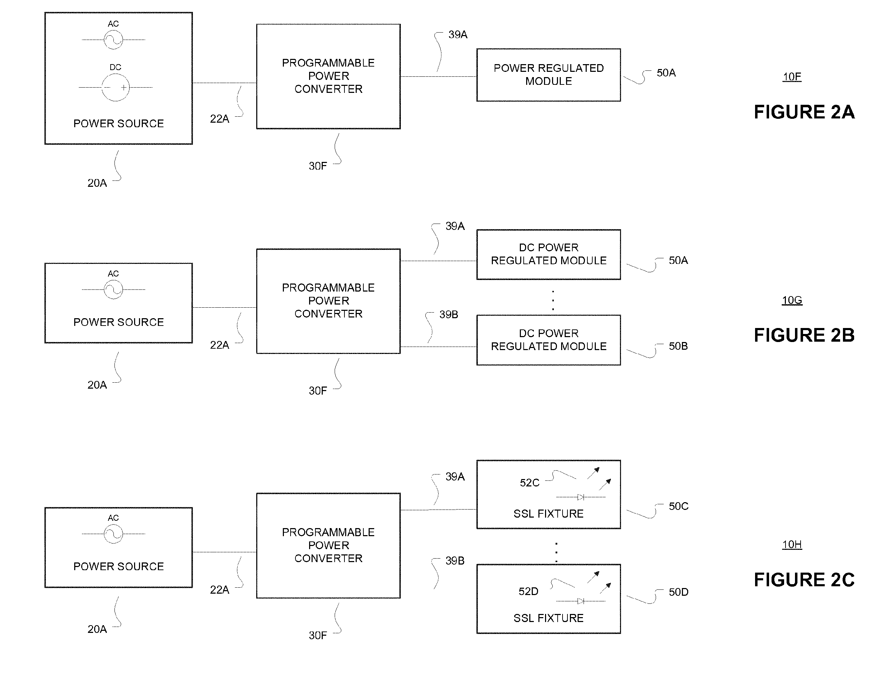

In order to reduce the number of different power converters 30A-30E needed for multiple architectures 10A-10E, various operating attributes, characteristics, or parameters of a power converter 30F may be programmed, modified, or selected after assembly by the manufacturer, distributor, installer, and customer in an embodiment. FIG. 2A is a simplified diagram of a power conversion architecture 10F according to various embodiments. As shown in FIG. 2A, architecture 10F includes a power source 20A, a programmable power converter or driver 30F, and a power regulated module or device 50A. As shown in FIG. 2A, a power source 20A may provide a power signal 22A having various waveforms including Alternating Current (AC) and DC waveforms. The programmable power converter 30P may include circuitry to convert an AC or DC power signal 22A into a desired, regulated power signal 39A based on programmed settings.

FIG. 2B is a simplified diagram of a power conversion architecture 10G according to various embodiments. As shown in FIG. 2B, architecture 10G includes a power source 20A, a power converter or driver 30F, and a plurality of DC power regulated modules or devices 50A-B. The plurality of DC power regulated modules 50A-B may require power signals 39A-B having specific waveforms, current levels, voltage levels, or power levels. As shown in FIG. 2B, a power source 20A may provide a power signal 22A having an AC waveform. The programmable power converter 30F may be directed to convert an AC power signal 22A into a plurality of desired, regulated DC power signals 39A-B.

FIG. 2C is a simplified diagram of a power conversion architecture 10H according to various embodiments. As shown in FIG. 2C, architecture 10H includes a power source 20A, a programmable power converter or driver 30F, and a plurality of solid-state lighting (SSL) fixtures 50C-D. As noted, the plurality of SSL fixtures 50C-D may require power signal 39A-B having specific waveforms, current levels, voltage level, or power levels. In addition, the waveform, current, voltage, and power may be varied during various operational events (power on, power off, and others) to protect the SSL fixtures 50C-D. As noted in an embodiment, the SSL fixtures may include one or more light emitting diodes 52C, 52D. As shown in FIG. 2C, a power source 20A may provide a power signal 22A having an AC waveform. The programmable power converter 30F may be programmed to convert an AC power signal 22A into a plurality of desired, regulated DC power signals 39A-B.FIG as required for SSL fixtures 50C-D. It is noted that one or more power regulated modules 50A-B or SSL fixtures 50C-D may be coupled to a programmable power converter 30F in series, parallel, or combination thereof.

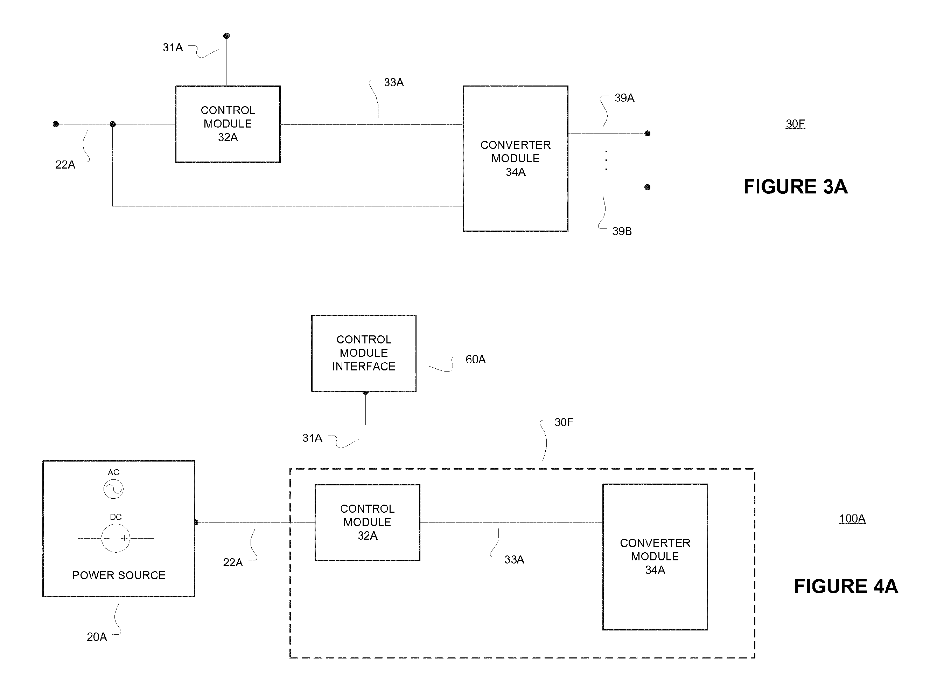

As shown in FIGS. 2A-2C, a programmable power converter 30F may be employed in architecture 10F-H, FIGs. 2A-2C. In each architecture 10F-H, the programmable power converter 30F may be configured or programmed to generate power signals 39A, 39A-B based on the waveforms required or elected for the power regulated modules 50A of FIG. 2A, 50A-B of FIG. 2B, and SSL fixtures 52C-D or FIG. 2C. FIG. 3A is a block diagram of wired programmable power converter or driver system 30F according to various embodiments that may be employed in architectures 10A-10H. As shown in FIG. 3A, the programmable power converter 30F may include a control module 32A and a converter module 34A. The converter module 34A may receive a power signal 22A and generate one or more power signals 39A-B from the power signal 22A.

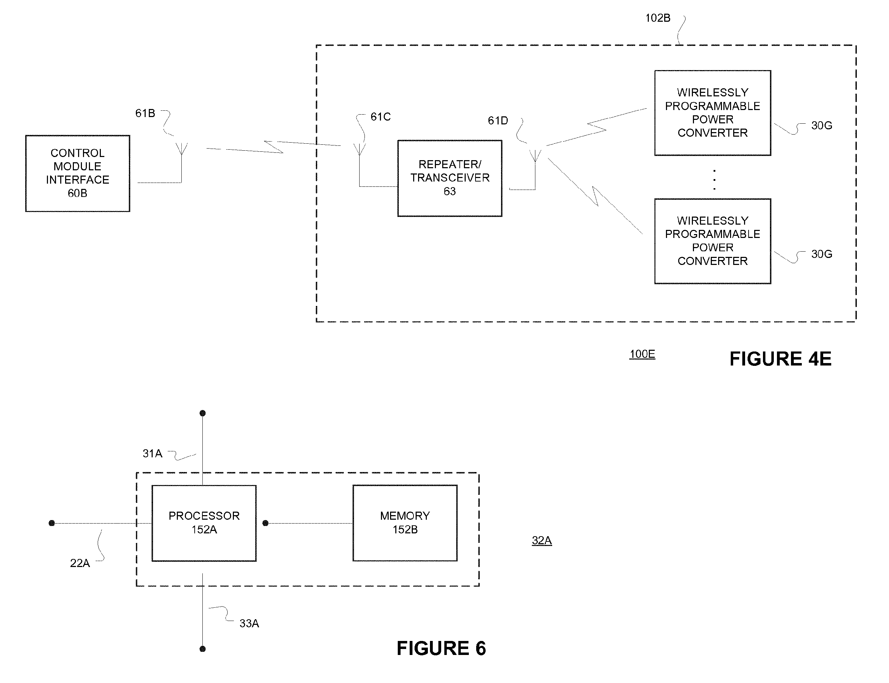

The control module 32A may also provide one or more control signals 33A. The control signals 33A may direct the converter module 34A to modulate the received power signal 22A to generate one or more desired power signals 39A-B. A user may regulate the operations of the programmable converter 30F via one or more operation signals 31A provided to the control module 32A. The control module 32A may include a processor 152A and a memory 152B as shown in FIG. 6. For architectures 10C, 10H including SSL fixtures 50C, 50D, the control module 32A may control the setpoint, fade, and dimming of the fixtures 50C, 50D via the power signals 39A, 39B. Other parameters may include the power signals 39A-B output voltage level (Vout), under voltage limit (UV), over voltage limit (OV), Digital Addressable Lighting Interface (DALI) controls, and PWM settings.

A user may select various attributes via the control module 32A signals 31A. The control module 32A may store the selections in a memory 152B and control or modulate the operation of the converter module 34A (via the processor 152A). Via the signals 31A, the control module 32A may provide the operational status of the programmable converter 30F including the settings and operational data including the maximum temperature, minimum temperature, dates in service, fault summary, over temperature protection (OTP), and customer data. FIG. 4A is a block diagram of power converter wired programming architecture 100A according to various embodiments. As shown in FIG. 4A, architecture 100A includes a power source 20A, a wired programmable power converter 30F, and a control module interface 60A. In architecture 100A, the control module interface 60A is coupled to the control module 32A directly via one or more wires 31A.

In an embodiment, a power source 20A may need to be coupled to the programmable power converter 30F in order to enable the control module interface 60A to communicate with the power converter 30F. A user via the control module interface 60A may set one or more operational attributes of the programmable power converter 30F or receive status data from the programmable power converter 30F. A user may program a power converter 30F via architecture 100A at various stages of its life cycle from production, storage in a factory, distribution or storage at a distributor, at a customer location, at its installed location, and returned to the factory or a service center for repairs or maintenance.

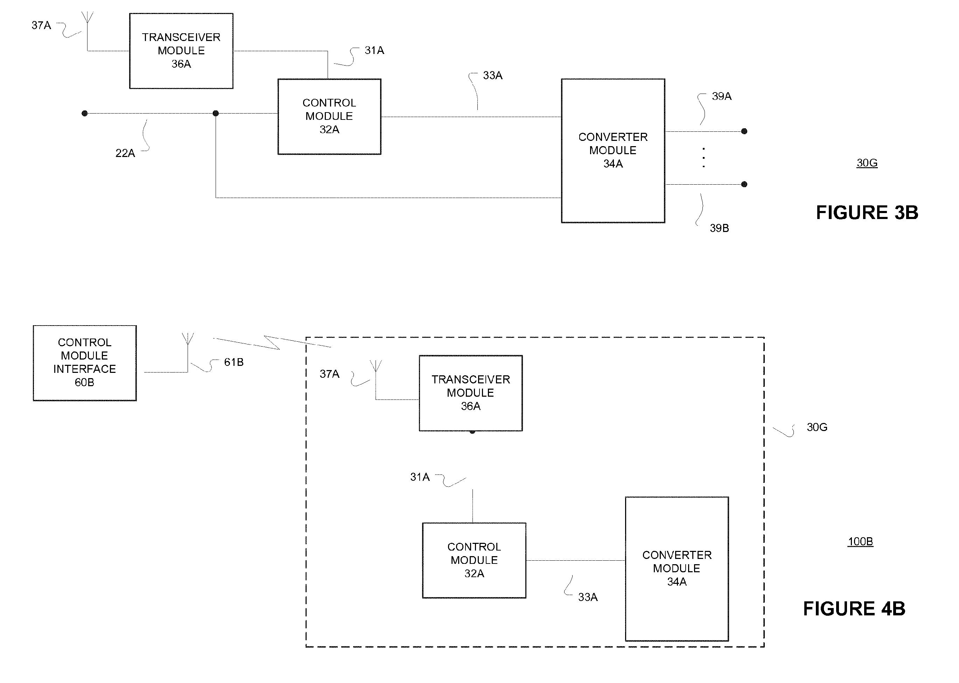

FIG. 3B is a block diagram of a wirelessly programmable power converter or driver system 30G according to various embodiments that may be employed in architectures 10A-10H. As shown in FIG. 3B, the wirelessly programmable power converter 30G may include a transceiver modulator/demodulator module (TMM) 36A, an antenna 37A, a control module 32A and a converter module 34A. The converter module 34A may receive a power signal 22A and generate one or more power signals 39A-B from the power signal 22A. The control module 32A may also provide one or more control signals 33A. The control signals 33A may direct the converter module 34A to modulate the received power signal 22A to generate one or more desired power signals 39A-B.

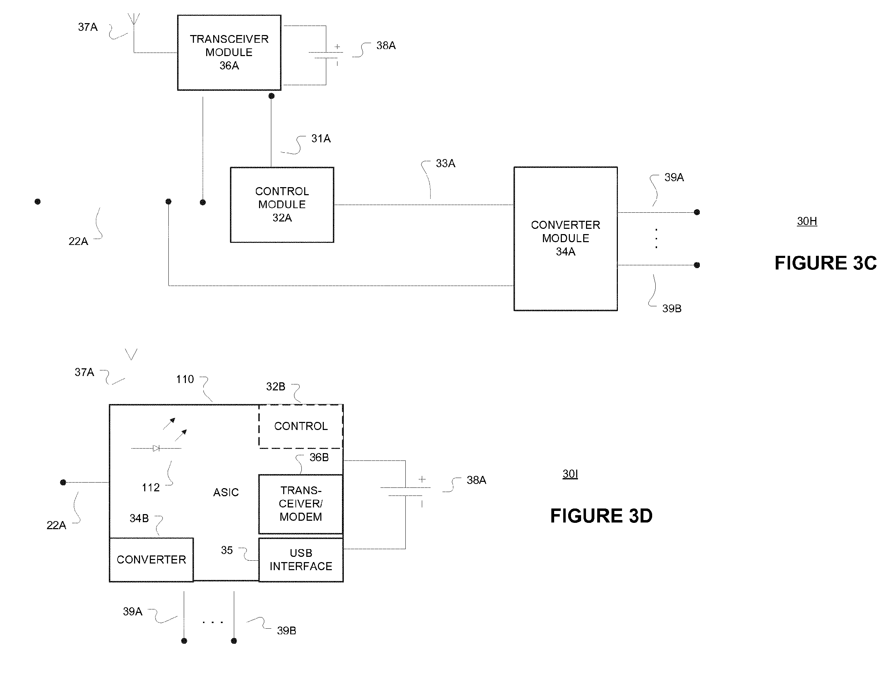

The TMM 36A via the antenna 37A may be directed to communicate one or more operation signals 31A with the control module 32A. A user may regulate the operations of the wirelessly programmable converter 30G by communicating control signals wirelessly with the TMM 36A. The TMM 36A may be any device capable or communicating data in one or more data communication formats including wireless and wired formats. Referring to FIG. 3D, a TMM 36B may be included in an application specific integrated circuit (ASIC) 110. The TMM 36A may include a transceiver and modem that may communicate digital or analog data with one or more control module interfaces (CMI) 60B (FIG. 4B). A TMM 36A may communicate with a CMI 60B using one or more known digital communication formats including a cellular protocol such as code division multiple access (CDMA), time division multiple access (TDMA), Global System for Mobile Communications (GSM), cellular digital packet data (CDPD), Worldwide Interoperability for Microwave Access (WiMAX), satellite format (COMSAT) format, and local protocol such as wireless local area network (commonly called "WiFi"), Near Field Communication (NFC), radio frequency identifier (RFID), ZigBee (IEEE 802.15 standard) (and Bluetooth.

As known to one skilled on the art the Bluetooth protocol includes several versions including v1.0, v1.0B, v1.1, v1.2, v2.0 + EDR, v2.1 + EDR, v3.0 + HS, and v4.0. The Bluetooth protocol is an efficient packet-based protocol that may employ frequency-hopping spread spectrum radio communication signals with up to 79 bands, each band 1 MHz in width, the respective 79 bands operating in the frequency range 2402-2480 MHz. Non-EDR (extended data rate) Bluetooth protocols may employ a Gaussian frequency-shift keying (GFSK) modulation. EDR Bluetooth may employ a differential quadrature phase-shift keying (DQPSK) modulation.

The WiFi protocol may conform to an Institute of Electrical and Electronics Engineers (IEEE) 802.11 protocol. The IEEE 802.11 protocols may employ a single-carries direct-sequence spread spectrum radio technology and a multi-carrier orthogonal frequency-division multiplexing (OFDM) protocol. In an embodiment, one or more electronic devices 30A to 30D may communicate with the EDPDC apparatus 520A TMM 36A via a WiFi protocol.

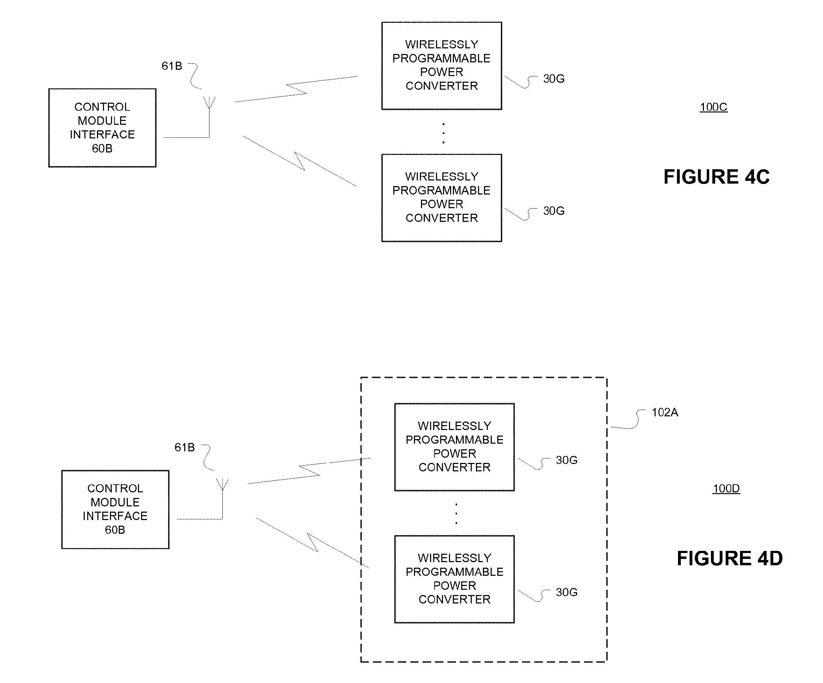

The cellular formats CDMA, TDMA, GSM, CDPD, and WiMax arc well known to one skilled in the art. It is noted that the WiMax protocol may be used for local communication between the one or more electronic devices 60B and a TMM 36A. The WiMax protocol is part of an evolving family of standards bein developed by the Institute of Electrical and Electronic Engineers (IEEE) to define parameters of a point-to-multipoint wireless, packet-switched communications systems. In particular, the 802.16 family of standards (e.g., the IEEE std. 802.16-2004 (published September 18, 2004)) may provide for fixed, portable, and/or mobile broadband wireless access networks. Additional information regarding the IEEE 802.16 standard may be found in IEEE Standard for Local and Metropolitan Area Networks-Part 16: Air Interface for Fixed Broadband Wireless Access Systems (published October 1,2004). See also IEEE 802.16E-2005, IEEE Standard for Local and Metropolitan Area Networks-- Part 16: Air Interface for Fixed and Mobile Broadband Wireless Access Systems-- Amendment for Physical and Medium Access Control Layers for Combined Fixed and Mobile Operation in Licensed Bands (published February 28, 2006). Further, the Worldwide Interoperability for Microwave Access (WiMAX) Forum facilitates the deployment of broadband wireless networks based on the IEEE 802.16 standards. For convenience, the terms "802.16" and "WiMAX" may be used interchangeably throughout this disclosure to refer to the IEEE 802.16 suite of air interface standards. The ZigBee protocol may conform to the IEEE 802.15 network and two or more wireless power converters 30G may form a mesh network. As shown in FIG. 4D, a plurality of wirelessly, programmable power converters 30G located in a container 102A may communicate with each other via a mesh network.

FIG. 4E is block diagram of a multiple power converter wirelessly programming architecture 100E according to various embodiments. As shown in FIG. 4E, programming architecture 100E includes a control module interface 60B and a container 102B. The container 102B may include a plurality of wirelessly programmable power converter 30G and one or more communication modules 63 where the module 63 may include a repeater or transceiver, In an embodiment, a CMI 60B may communicate with the repeater/transceiver 63 via a first protocol (via antenna 61C or 61 D) and the repeater/transceiver G3 may communicate with one or more power converters 30G via a second protocol. A CMI 60B may also communicate with a power converter 30G directly via a first or second protocol. In an embodiment, a CMI 60B may communicate with a repeater/transceiver 63 via a first protocol and the repeater/transceiver 63 may communicate with one or more power converters 30G via the same, first protocol. In an embodiment, the repeater/transceiver 63 may also communicate message from one or more power converters 30G in the container with the CMI 60B. The communication module 63 may also include a one-way receiver that only communicates signals from the CMI 60B with one or more power converters 30G. The communication module 63 may include a power source such as battery to provide energy to the communication module 63. The communication module 63 may also obtain energy from a communication signal generated by the CMI 60B in an embodiment.

NFC standards include communications protocols and data exchange formats that may be based on existing radio-frequency identification (RFID) standards including ISO/IEC 14443 and FeliCa, ISO/IEC 18092, ISO 15692, ISO 18000-3 mode I, and others defined by the NFC Forum. NFC protocols may enable two way communication between a CMI 60B and a TMM 36A. In an embodiment, a TMM module 36A may support only one-way communication and receive operational attributes wirelessly from a CMI 60B via one or more wireless communication protocols. In a further embodiment, a TMM 36A may be able operate with energy provided by the CMI 60B or other wireless forms of energy transfer including induction, In an embodiment, a TMM 36A may include non-volatile memory and may store operational status and received operational attributes in memory for communication with the control module 32A when wired energy or power is provided to the power converter 30G via a power signal 22A. In an embodiment, a TMM 36A may include a dynamic NFC/RFID tag integrated circuit with an Electrically Erasable Programmable Read-Only Memory (EEPROM), energy harvesting interface.

A CM1 60B may include a NFC transceiver capable of communicating with the TMM 36A. In a power converter30H embodiment shown in FIG. 3C, an energy source 38A may be physically coupled to a TMM 36A. In such an embodiment, the TMM 36A may not employ an energy harvesting IC. In an embodiment, a TMM 36A of power converter 30H may include a dynamic NFC/RFID tag integrated circuit with an EEPROM.

The control module 32A may include a processor 152A and a memory 152B as shown in FIG. 6. For architectures 10C, 10H including SSL fixtures 50C, 50D, the control module 32A may control the setpoint, fade, and dimming of the fixtures 50C, 50D via the power signals 39A, 39B. Other parameters may include the power signals 39A-B output voltage level (Vout), under voltage limit (UV), over voltage limit (OV), Digital Addressable Lighting Interface (DALI) controls, and PWM settings.

A user may select various attributes and operational attributes via a CMI 60B. The TMM 36A may store the selections in a memory and provide the selections to the control module 32A. The control module 32A may store the selections in a non-volatile memory 152B and control or modulate the operation of the converter module 34A (via the processor 152A). Via the signals 31 A, the control module 32A may provide the operational status of the programmable converter 30F including the settings and operational data including the maximum temperature, minimum temperature, dates in service, fault summary, over temperature protection (OTP), and customer data. The TMM 36A may store the operational status in a memory (EEPROM in an embodiment) until requested by a CMI 60B. FIG. 4B is a block diagram of power converter wireless programming architecture 100B according to various embodiments. As shown in FIG. 4B, architecture 100B includes a CM1 60B and a wirelessly programmable power converter 30G. In architecture 100B, the control module interface 60B may communicate wirelessly with the power converter 30G control module 32A via the TMM 36A.

In an embodiment, architecture 100B does not require a power source 20A coupled to the programmable power converter 30G in order to enable a user to employ a control module interface 60B to communicate with the power converter 30G. A user via the control module interface 60B may set one or more operational attributes of the programmable power converter 30G or receive status data from the programmable power converter 30G. A user may program a programmable converter 30G via architecture 100B at various stages of its life cycle from production, storage in a factory, distribution or storage at a distributor, at a customer location, at its installed location, and returned to the factory or a service center for repairs or maintenance.

FIG. 4C is a block diagram of multiple power converter wireless programming architecture 100C according to various embodiments. As shown in FIG. 4C, architecture 100C includes a CMI 60B and a plurality of wirelessly programmable power converters 30G. In architecture 100C, a user may employ a CMI 60B to wirelessly program several power converters 30G. Depending on the communication protocol and security protocols, a user may be able to wirelessly communicate with two or more power converters 30G contemporaneously. A user via the CMI 60B (and its antenna 61B) may be able to request and receive operational status from two or more power converters 30G contemporaneously. In an embodiment, a wirelessly programmable power converter 30G-I may be able to communicate with another wirelessly programmable power converter 30G-I to forward a communication to or from a CMI 60B.

FIG. 4D is a block diagram of multiple power converter wireless programming architecture 100D according to various embodiments. As shown in FIG. 4D, architecture 100D includes a CMI 60B and a plurality of wirelessly programmable power converters 30G. In an embodiment, the plurality of wirelessly programmable power converters 30G may be located or stored in a shipping container 102 including a cardboard box or co-located on a pallet. In architecture 100D, a user may employ a CMI 60B to wirelessly program several power converters 30G collocated in a storage or shipping container 102 or co-located on a pallet. Depending on the communication protocol and security protocols, a user may be able to wirelessly communicate with two or more power converters 30G contemporaneously while packaged or co-located on a pallet. A user via the CMI 60B (and its antenna 61B) may be able to request and receive operational status from two or more power converters 30G contemporaneously while packaged. In an embodiment, a wirelessly programmable power converter 30G may be able to communicate with another wirelessly programmable power converter 30G to forward a communication to or from a CMI 60B while packaged or co-located on a pallet.

FIG. 3C is a block diagram of a wirelessly programmable power converter or driver system 30H according to various embodiments that may be employed in architectures 10A-10H. As shown in FIG. 3C, the wirelessly programmable power convener 30H may include a transceiver modulator/demodulator module (TMM) 36A, a power source 38A, an antenna 37A, a control module 32A and a converter module 34A. The converter module 34A may receive a power signal 22A and generate one or more power signals 39A-B from the power signal 22A. The control module 32A may also provide one or more control signals 33A. The control signals 33A may direct the converter module 34A to modulate the received power signal 22A to generate one or more desired power signals 39A-B.

In an embodiment, the power source 38A may be coupled to the TMM 36A and enable the TMM 36A to operate while power is not provided to the system 30H. In an embodiment, the power source 38A may be rechargeable and may be charged by the TMM 36A when the power converter 30H receives a power signal 22A. In an embodiment, a transceiver module 36A-B may be made inoperative when a power signal 22A is received via a signal 31A from the control module 32A. FIG. 3D is a block diagram of a wirelessly programmable power converter or driver system 301 including an application specific integrated circuit (ASIC) 110 according to various embodiments that may be employed in architectures 10A-10H. As shown in FIG. 3D, the wirelessly programmable power converter 30I may include an ASIC 110 that includes the functionally of a transceiver mo<lulator/demodulator module (TMM) 36B, a control module 32B, and a converter module 34B. The ASIC 110 may further include a Universal Serial Bus (USB) interface 35 in an embodiment. In an embodiment, the ASIC 110 may receive a power signal 22A and generate one or more power signals 39A-B from the power signal 22A. The ASIC 110 may modulate the received power signal 22A to generate one or more desired power signals 39A-B based on received operational control signals via the antenna 37A. As shown in FIG. 3D, the ASIC 110 may include one or more light emitting diodes (LEDs) 112. The LEDs 112 may indicate the operational status of the power converter 301 including the power source 38A charge status.

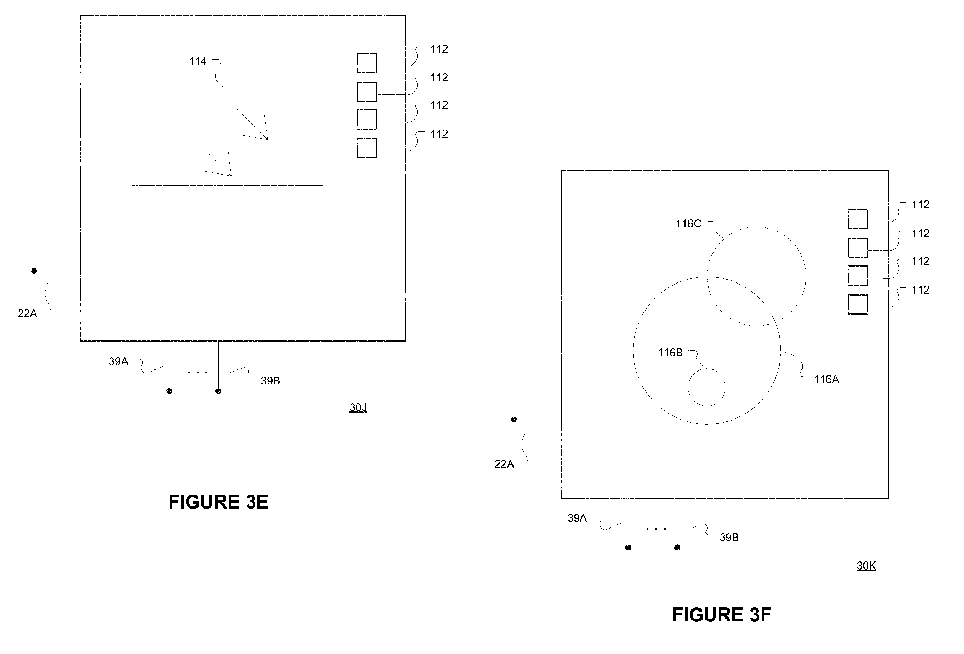

FIG. 3E is a block diagram of a programmable power converter system 30J including light to energy conversion module 114 according to various embodiments. In an embodiment, the light to energy conversion module 114 may be a solar panel 114 that may convert light to electrical energy to operate a TMM 36A, 36B or charge a power source 38A. The solar panel 114 may be coupled to the TMM 36A, 36B. In an embodiment, the power source 38A may be a battery, capacitor, or other device capable of storing and discharging electrical energy.

FIG. 3F is a block diagram of a programmable power converter system 30K including an energy conversion module 116A according to various embodiments. The energy conversion module 116A may include a hand crank electrical generator 116A. The hand crank electrical generator 116A may include a crank 116B and an electrical generator 116C coupled to the crank 116B. The electrical generator 116C may be coupled to the TMM 36A, 36B to provide electrical energy to operate a TMM 36A, 36B or charge a power source 38A. The electrical generator 116C may be a magnetic induction charging generator 116C in an embodiment.

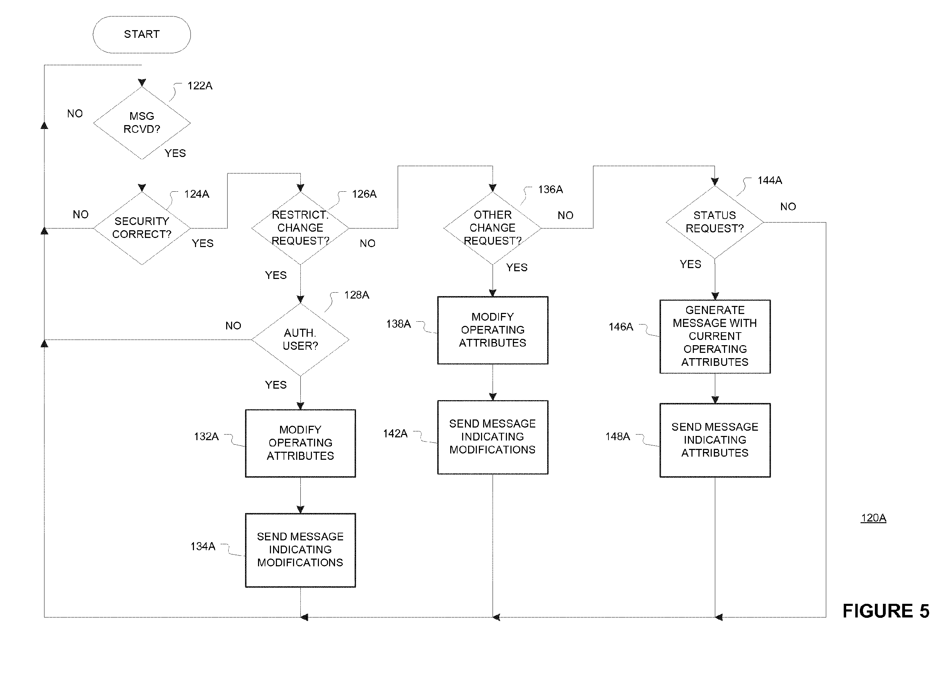

FIG. 5 is a flow diagram illustrating several methods 120A that may be employed by a TMM 36A, 36B and a control module 32A, 32B according to various embodiments. A TMM 36A, 36B may receive a message (activity 122A) from a CMI 60B. It is noted that a control module interface may be any device capable of communicating signals to a TMM 36A, 36B including a specialized communication device, laptop, personal computer, cellular device, tablet, or other processor including or coupled to the processor. In an embodiment, a TMM 36A, 36B or a control module 32A, 32B receiving the message may determine whether the message is directed to the power converter 30G-I and includes any required security protocols (activity 124A).

A TMM 36A, 36B or a control module 32A, 32B receiving the message may determine whether the requested operation(s) are restricted (such as changing over voltage levels) (activity 126A) and whether the security level or user associated with the request is authorized to request such change(s) (activity 128A). If the user or security is authorized to request the change, the control module 32A, 32B may modify one or more operating attributes of a converter module 34A, 34B to achieve the requested operational change(s) (activity 132A). In an embodiment the converter module may include a buck converter and the control module 32A, 32B may regulate the switching characteristics of the buck converter to regulate any power signal 39A-B generated by the buck converter. Via the TMM 36A, 36B, a power converter 30G-1 may report when a requested operation change(s) has been completed (activity 134A).

A TMM 36A, 36B or a control module 32A, 32B receiving the message may determine whether the requested operation(s) include other non-restricted requests (activity 136A). The control module 32A, 32B may modify one or more operating attributes of a converter module 34A, 34B to achieve the requested operational change(s) (activity 138A). Via the TMM 36A, 36B, a power converter 30G-I may report when a requested operation change(s) has been completed (activity 142A). A TMM 36A, 36B or a control module 32A, 32B receiving the message may determine whether the request is a status request (activity) 144A). The control module 32A, 32B may generate a message including one or more current operating attributes of the power converter 30G-I (activity 146A). Via the TMM 36A, 36B, a power converter 30G-1 may forward the requested status report to a user (activity 148A).

It may be possible to execute the activities described herein in an order other than the order described. Various activities described with respect to the methods identified herein can be executed in repetitive, serial, or parallel fashion. A software program may be launched from a computer-readable medium in a computer-based system to execute functions defined in the software program. Various programming languages may be employed to create software programs designed to implement and perform the methods disclosed herein. The programs may be structured in an object-orientated format using an object-oriented language such as Java or C++. Alternatively, the programs may be structured in a procedure-orientated format using a procedural language, such as assembly or C. The software components may communicate using a number of mechanisms well known to those skilled in the art, such as application program interfaces or inter-process communication techniques, including remote procedure calls. The teachings of various embodiments arc not limited to any particular programming language or environment.

The accompanying drawings that form a part hereof show, by way of illustration and not of limitation, specific embodiments in which the subject matter may be practiced. The embodiments illustrated arc described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims arc entitled.

Such embodiments of the inventive subject matter may be referred to herein individually or collectively by the term "invention" merely for convenience and without intending to voluntarily limit the scope of this application to any single invention or inventive concept, if more than one is in fact disclosed. Thus, although specific embodiments have been illustrated and described herein, any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

The Abstract of the Disclosure is provided to comply with 37 C.F.R. §1.72(b), requiring an abstract that will allow the reader to quickly ascertain the nature of the technical disclosure. It is submitted with the understanding that it will not be used to interpret or limit the scope or meaning of the claims. In the foregoing Detailed Description, various features are grouped together in a single embodiment for the purpose of streamlining the disclosure. This method of disclosure is not to be interpreted to require more features than are expressly recited in each claim. Rather, inventive subject matter may be found in less than all features of a single disclosed embodiment. Thus the following claims arc hereby incorporated into the Detailed Description, with each claim standing on its own as a separate embodiment.

## Claims

1. A programmable power system (100B), including:
a programmable power converter (30G), including:
a configurable power converter module (34A), the converter module receiving a first power signal (22A) having a plurality of operating attributes and converting the first power signal into a second power signal (39A) having at least one configurable operating attribute; and
a wireless receiver module (36A), the receiver module coupled to the converter module and capable of configuring the at least one configurable operating attribute based on a received control signal.

2. The programmable power system (100B) of claim 1, further including a wireless control module interface (CMI) (60B), the CMI capable of wirelessly communicating a control signal to a power converter module (30G).

3. The programmable power system (100B) of claim 1 or 2, wherein the first power signal (22A) includes an alternating current (AC) waveform and the second power signal (39A) includes a direct current (DC) waveform.

4. The programmable power system (100B) of claim 1 or 2, wherein the first power signal (22A) includes a direct current (DC) waveform and the second power signal (39A) includes a direct current (DC) waveform.

5. The programmable power system (100B) of claim 1, 2, 3, or 4, wherein the configurable operating attribute include one of voltage level and current level.

6. The programmable power system (100B) of claim 1, 2, 3, 4, or 5, wherein the wireless receiver module (36A) is a wireless transceiver module (36A)and is capable of wirelessly communicating at least one operational attribute about the programmable power converter (30G).

7. The programmable power system (100B) of claim 1, 2, 3, 4, or 5, wherein the wireless receiver module (36A) is a wireless transceiver module (36A) and is capable of wirelessly communicating at least one operational attribute about the programmable power converter (30G) upon receipt of status request message.

8. The programmable power system (100B) of claim 6 or 7, wherein the operational attribute is one of maximum temperature, minimum temperature, and operational voltage.

9. The programmable power system (100B) of claim 1 or 8, wherein the wireless receiver module (36A) harvests operational energy from received signals and does not receive energy from the first power signal (22A).

10. The programmable power system (100B) of claim 1 or 9, wherein the wireless receiver module (36A) employs one of a near field communication protocol and a radio frequency identifier protocol.

11. The programmable power system (100B) of claim 1, 9, or 10, wherein the second power signal (39A) is configured to drive at least one solid state lighting (SSL) fixture (52C).

12. The programmable power system (100B) of claim 11, wherein the configurable operating attribute includes one of fade and dimming levels.

13. The programmable power converter system (100B) of claim 2, 8, 9, 10, 11, or 12. wherein the CMI (60B) is capable of wirelessly communicating a control signal to a plurality of power converter modules (30G).

14. The programmable power converter system (100B) of claim 2, 8, 9, 10, 11, or 12, wherein the CMI (60B) is capable of wirelessly communicating a control signal to a plurality of power converter modules (30G) contemporaneously.
